Europäisches Patentamt

European Patent Office

Office européen des brevets

(11) Publication number: **0 352 919**
**A2**

## (12) EUROPEAN PATENT APPLICATION

(21) Application number: **89306793.4**

(22) Date of filing: **04.07.89**

(51) Int. Cl.4: **C08L 51/06 , C08L 51/00 , C08L 51/04**

(30) Priority: **26.07.88 US 224523**

(43) Date of publication of application:
**31.01.90 Bulletin 90/05**

(84) Designated Contracting States:
**BE DE FR GB IT NL SE**

(71) Applicant: **THE DOW CHEMICAL COMPANY**
**2030 Dow Center, Abbott Road**
**Midland MI 48640(US)**

(72) Inventor: **Henton, David E.**
**5409 Woodview Pass**
**Midland Michigan 48640(US)**

(74) Representative: **Burford, Anthony Frederick et al**
**W.H. Beck, Greener & Co. 7 Stone Buildings Lincoln's Inn**
**London WC2A 3SZ(GB)**

(54) Blend comprising EPDM and acrylate rubbers having controlled graft levels.

(57) Rubber reinforced thermoplastic resins comprise (i) 5 to 40 weight percent of an elastomer phase of grafted EPDM terpolymer elastomer and grafted acrylate elastomer and (ii) 95 to 60 weight percent of a matrix phase comprising a monovinylidene aromatic-acrylonitrile copolymer. The grafted EPDM plastomer, which constitutes 10 to 90 weight percent of the elastomer phase, has a volume average particle size of 0.5 $\mu$m to 5.0 $\mu$m and 30 to 65 weight percent (based on EPDM elastomer weight) of a grafted superstrate. The grafted acrylate elastomer, which constitute 90 to 10 weight percent of the elastomer phase, has a volume average particle size of 0.05 $\mu$m to 0.45 $\mu$m and 10 to 50 weight percent (based on acrylate elastomer weight) of a grafted superstrate. The resin has improved impact resistance compared with conventional EPDM-acrylate rubbers.

EP 0 352 919 A2

## BLEND COMPRISING EPDM AND ACRYLATE RUBBERS HAVING CONTROLLED GRAFT LEVELS

The present invention relates to rubber reinforced resins. More particularly, the present invention relates to rubber reinforced resins having improved weather resistance and physical characteristics. In one embodiment, the present invention relates to an improved rubber reinforced styrene acrylonitrile resin.

It is previously known in the art to prepare rubber modified resins wherein the rubber is a copolymer or terpolymer containing ethylene, propylene and optionally a copolymerizable diene monomer. Such rubbers are known as EPDM rubbers. In U.S. Patent 3,489,821 a blend comprising an EPDM graft terpolymer and a hard matrix resin is disclosed. At Col. 7, line 31, the reference teaches that the graft copolymer resin blend may be mixed with other resins and/or rubbers.

In U.S. Patent 3,576,910, there is disclosed an ABS polyblend comprising matrix and grafted rubbers wherein the grafted superstrate consists at least principally of a monovinylidene aromatic hydrocarbon and an unsaturated nitrile, i.e., styrene acrylonitrile copolymer. Suitable rubbers for use in the polyblend include diene rubbers, acrylate rubbers, polyisoprene rubbers and mixtures thereof.

U.S. Patent 4,585,832 disclosed weather and impact resistant resins containing both a grafted acrylate rubber and a different grafted rubber. The second rubber could be either an EPDM rubber or a diene based rubber. Amounts of acrylate from 60 to 97 percent based on total grafted rubber weight were employed.

In U.S. Patent 4,397,987 a similar polyblend comprising a nitrile rubber and an EPDM graft rubber is disclosed. In Table 9, Col. I, a blend of an ungrafted EPDM rubber and HYCAR® 4041, an acrylate rubber, was prepared. However, the compatibility of the rubber blend was so poor that the blend could not be cured.

Previously known rubber reinforced resins comprising an EPDM graft copolymer elastomer have demonstrated good toughness as evidenced by high impact resistance at 25°C and good weather resistance, particularly resistance to ozone and radiation degradation. These resins, however, have demonstrated poor ductility, as shown by generally low elongations of from 10 to 20 percent as measured by ASTM test D-638 at 0.2 inches (0.5 cm)/minute. Frequently, such resins are characterized by a "cheesy" or friable nature when flexed or drawn. This poor ductility in the resulting rubber reinforced weatherable polymer is believed to be a result of a low level of crosslinking inherent in the EPDM graft copolymer rubber. Whereas good weather resistance results from the use of EPDM copolymer rubbers due to the inherent chemical stability of such rubber, the same stability results in only a poor or limited ability to crosslink the EPDM rubber or graft with matrix polymer. While to some extent this problem may be alleviated by the use of greater amounts of initiator in the grafting processes or high temperature post treatment, such variations involve increased cost and ultimate contamination of the resin resulting in decreased weatherability, poor appearance or decreased notched Izod strength.

While the addition of an acrylate rubber to an EPDM modified resin has been attempted in order to provide improved polymer properties the resulting resin blend often fails to achieve a good balance of such properties. In particular the impact resistance of a resulting blend is often adversely affected if a portion of EPDM rubber is replaced by acrylate rubber.

According to the present invention, there is now provided a rubber reinforced thermoplastic polyblend comprising from 5 to 40 percent by weight of an elastomer phase and 95 to 60 percent by weight of a matrix polymer wherein (i) the elastomer phase comprises (a) from 90 to 10 percent based on elastomer weight of a grafted EPDM terpolymer rubber having a volume average particle size from $0.5\ \mu$ to $5.0\ \mu$ and an amount of grafted superstrate from 30 to 65 percent based on EPDM terpolymer rubber weight/ and (b) 10 to 90 percent based on elastomer weight of a grafted acrylate rubber having a volume average particle size from $0.05$ to $0.45\ \mu$ and an amount of grafted superstrate from 10 to 50 percent based on acrylate rubber weight, and (ii) the grafted superstrate polymers and matrix polymer are monovinylidene aromatic-acrylonitrile copolymers. Preferably, said copolymers comprise:

from 10 to 90 weight percent of styrene, $\alpha$-methyl styrene, or ring alkyl or halo substituted styrenes;

from 10 to 40 weight percent acrylonitrile; and

from 0 to 80 weight percent of methyl methacrylate, maleic anhydride, N-phenylmaleimide or N-ethyl maleimide.

Surprisingly the polyblend of the invention possesses good Izod impact resistance compared to similar resins wherein the amount of grafting on the various elastomers is not so controlled. The resulting resin is extremely useful for preparing moldings, and extruded coated sheet objects.

The matrix copolymer is typically prepared during the polymerization process used to graft the EPDM and acrylate elatomers. Additional separately prepared matrix can also be prepared and blended with the rubber containing resins. Preferred are matrix copolymers comprising from 65 to 90 percent monovinylidene aromatic monomer, 10 to 35 percent acrylonitrile and 0 to 20 percent methylmethacrylate. Most preferred matrix copolymers comprise 70 to 85 percent styrene and 15 to 30 percent acrylonitrile. The elastomer phase desirably comprises from 15 to 35 percent by weight of the polyblend of the invention.

EPDM rubbers employed to prepare the grafted elastomers for use in the present invention are well known in the art. While a variety of alpha-monoolefins may be used in preparing EPDM rubbers, most desirable are those elastomers comprising a terpolymer of ethylene and propylene with an ethylenically unsaturated copolymerizable non-conjugated diene monomer. Illustrative non-limiting examples of suitable dienes which may be used include dicyclopentadiene, ethylidene norbornene and 1,4-hexadiene.

Methods of preparing EPDM graft copolymers are also well known in the art. Suitably the graft copolymer is polymerized in the presence of the rubbery EPDM spine polymer utilizing either emulsion, suspension, or solution polymerization techniques. Preferred grafted EPDM rubbers have a volume average particle size from 0.8 $\mu$ to 2.0 $\mu$. Most preferred are those rubbers prepared by grafting the rubber spine in a solution or suspension process.

Acrylate rubbers for grafting and use according to the present invention are also previously known in the art. Preferred acrylate rubbers are crosslinked homopolymers of $C_{1-8}$ alkyl acrylates, especially butyl acrylate or 2-ethylhexyl acrylate, and crosslinked copolymers thereof with up to 25 weight percent, preferably up to 10 percent, of a copolymerizable comonomer. Suitable copolymerizable comonomers include monovinylidene aromatic monomers, e.g. styrene, alphamethyl styrene, etc., acrylonitrile, and alkyl methylacrylates such as methyl methacrylate. A preferred acrylate rubber comprises polybutylacrylate optionally containing various di- and tri-vinyl substituted crosslinking and graft enhancing agents present in an amount up to 5 percent by weight based on total rubber weight.

Preferably the acrylate rubber is prepared by an emulsion process. Emulsion polymerized acrylate rubbers when employed may be partially agglomerated as is previously known in the art in order to provide greater variety of particle size distribution in the resulting acrylate rubber product thereby controlling gloss and impact properties of the resin. The rubber particles can also be grown to various sizes by known seeding techniques, and/or a mixture of previously prepared large and small seed particles may be employed to form the grafted rubber. The grafted acrylate rubber's volume average particle diameter is preferably from 0.07 $\mu$ to 0.4 $\mu$, most preferably from 0.1 to 0.25 $\mu$. Volume average particle diameters are measured in the latex form of the rubber before grafting using techniques of Transmission Electron Microscopy or hydrodynamic chromatography as disclosed in U.S. Patent 4,419,496. Grafting of acrylate rubbers is also well known to the skilled artisan. Preferably the crosslinked acrylate rubber is grafted by means of an emulsion process.

The amount of grafting in both EPDM and acrylate rubbers is desirably controlled according to the previously disclosed requirements. The term percent grafting as used herein is defined as the weight of attached rigid phase weight/rubber weight x 100. In a preferred embodiment the percent graft on the EPDM rubber is from 35 to 55, while the percent graft on the acrylate rubber is from 15 to 46. While it is also preferred that each rubber substrate be grafted with the same graft copolymer which further is identical with the matrix resin, different copolymers may be employed for the various graft copolymers and matrix copolymer provided that the same are mutually compatible.

By means of an appropriate selection of the elastomer particle size, amount of crosslinking and total amount of EPDM and acrylate rubber used in the polyblend, resins having a wide variety of product properties may be prepared. Preferred compositions according to the invention are those wherein from 80 to 25 percent of the elastomer phase comprises a grafted EPDM terpolymer rubber and 20 to 75 percent of the elastomer phase comprises a grafted acrylate rubber.

In addition to the previously described grafted acrylate and EPDM rubbers, the present invented composition may optionally comprise other saturated elastomeric components including but not limited to vinyl acetate rubbers, hydrogenated diene rubbers, e.g. hydrogenated polybutadiene or hydrogenated block copolymers of butadiene with monovinylidene aromatic monomers and chlorinated polyethylenes. Preferably the elastomer consists essentially of the grafted EPDM rubber and grafted acrylate rubber.

While the matrix may also consist of a single copolymer, formed for example during the grafting process, additional compatible matrix polymer may be separately added. Separately added matrix may be the same or different from the above described matrix. Moreover the polyblend of the invention may suitably be blended with other polymers to prepare useful molding resins. Nonlimiting examples of suitable other polymers are aromatic polycarbonates, polyaryl ethers, polysulfones, polyvinyl chloride, polystyrene, and polymethylmethacrylate.

The following examples are provided to further illustrate the invention.

3

Examples 1-5

A suspension grafted EPDM rubber having a volume average particle size of 1μ and grafted with 43 percent by weight of a styrene acrylonitrile graft copolymer (30 percent acrylonitrile by weight) was blended with several emulsion grafted acrylate rubbers having a volume average particle size of 0.15 μm and various graft levels of styrene acrylonitrile grafted thereto. These dried, grafted EPDM and grafted acrylate rubber containing resins were tumble mixed with additional styrene acrylonitrile copolymer (30 percent acrylonitrile) and then passed once through a 0.8 inch (2.0 cm) Welding Engineers Twin Screw Extruder (Temperature 165°6 to 204°C). The dried pellets were injection molded at 218°C (barrel), 43°6 (mold) into test specimens. The test coupons were tested for physical properties to determine the effect of various graft levels in the acrylate rubber resin. The data obtained is contained in Table I.

The EPDM rubber used in the Examples contained 53% ethylene, 40% propylene and 7% ethylidene norbornene.

TABLE I

| Run | % EPDM Elastomer | % Graft on EPDM | % Acrylate Elastomer | % Graft on Acrylate | Ty[1] | %E[2] | Izod[3] | Gloss[4] |
|---|---|---|---|---|---|---|---|---|
| *Comparative 1 | 23 | 43 | 0 | NA | 5450 (383; 37.6) | 17 | 12.9 (1.78; 17.5) | 39 |
| Example 1 | 10 | 43 | 15 | 46 | 5460 (384; 37.65) | 29 | 7.6 (1.05; 10.3) | 86 |
| Example 2 | 10 | 43 | 15 | 44 | 5420 (381; 37.35) | 53 | 6.7 (0.93; 9.1) | 83 |
| Example 3 | 10 | 43 | 15 | 30 | 5320 (374; 36.7) | 58 | 6.7 (0.93; 9.1) | 84 |
| Example 4 | 10 | 43 | 15 | 22 | 5090 (358; 35.1) | 43 | 7.9 (1.09; 10.7) | 85 |
| Example 5 | 10 | 43 | 15 | 15 | -- | -- | 6.4 (0.88; 8.7) | -- |
| *Comparative 2 | 10 | 43 | 15 | 8 | 5490 (386; 37.85) | 33 | 4.4 (0.61; 6.0) | 74 |
| *Comparative 3 | 4.5 | 43 | 25.5 | 4 | 4740 (333; 32.7) | 67 | 1.9 (0.26; 2.6) | 87 |
| *Comparative 4 | 10 | 43 | 15 | 0 | 5390 (379; 37.15) | 54 | 2.8 (0.39; 3.8) | 76 |

*Not an example of the present invention
[1]Tensile yield in psi at 0.2 in/min (kg/sq cm at 0.5 cm/min; Pa at 0.5 cm/min)
[2]% elongation at 0.2 in/min (0.5 cm/min)
[3]Notched Izod ft lb/in of notch (kg M/2.54 cm notch; J/2.54cm notch)
[4]60° Gardner gloss

By reference to the results contained in Table I it may be seen that improved product properties particularly improved Izod impact values are obtained when the percent graft on the grafted acrylate rubber is between 10 and 50 percent. Elongation of the resulting resins is acceptable over the same range of graft levels.

Claims

1. A rubber reinforced thermoplastic polyblend of EPDM and acrylate rubbers comprising from 5 to 40 percent by weight of an elastomer phase and 95 to 60 percent by weight of a matrix polymer characterized in that (i) the elastomer phase comprises (a) from 90 to 10 percent based on elastomer weight of a grafted EPDM terpolymer rubber having a volume average particle size from 0.5 μm to 5.0 μm and from 30 to 65 percent of a grafted superstrate based on EPDM elastomer weight, and (b) 10 to 90 percent based on elastomer weight of a grafted acrylate rubber having a volume average particle size from 0.05μm to 0.45 μm and from 10 to 50 percent of a grafted superstrate based on acrylate elastomer weight, and (ii) the grafted superstrate polymers and matix polymer are monovinylidene aromatic-acrylonitrile copolymers.

2. A polyblend as claimed in Claim 1, wherein the said copolymers comprise:
from 10 to 90 weight percent of styrene, alphamethyl styrene, or ring alkyl or halo substituted styrene
from 10 to 40 weight percent acrylonitrile; and,
optionally, from 0 to 80 weight percent of methyl methacrylate, maleic anhydride, N-phenylmaleimide or N-ethyl maleimide.

3. A polyblend as claimed in Claim 1 or Claim 2, wherein the said copolymers comprise 65 to 90 weight percent monovinylidene aromatic monomer, 10 to 35 weight percent acrylonitrile and, optionally, 0 to 20 weight percent methylmethacrylate.

4. A polyblend as claimed in any one of the preceding claims, wherein the said copolymers comprise 70 to 85 weight percent styrene and 15 to 30 weight percent acrylonitrile.

5. A polyblend as claimed in any one of the preceding claims, wherein the said grafted superstrate polymers and matrix polymer are all indentical.

6. A polyblend as claimed in any one of the preceding claims, wherein the elastomeric phase comprises 15 to 35 weight percent of the polyblend.

7. A polyblend as claimed in any one of the preceding claims, wherein the EPDM rubber is a terpolymer of ethylene and propylene with an ethylenically unsaturated copolymerizable non-conjugated diene monomer.

8. A polyblend as claimed in any one of the preceding claims, wherein the graft level of the grafted EPDM rubber is from 35 to 55 percent and the graft level of the grafted acrylate rubber is from 15 to 46 percent.

9. A polyblend as claimed in any one of the preceding claims, wherein the grafted EPDM terpolymer rubber is prepared by solution or suspension polymerization techniques and the grafted acrylate rubber is prepared by emulsion polymerization techniques.

10. A polyblend as claimed in any one of the preceding claims, wherein the elastomer phase comprises 80 to 25 percent grafted EPDM terpolymer and 20 to 75 percent grafted acrylate rubber.

11. A polyblend as claimed in any one of the preceding claims, wherein the EPDM rubber volume average particle size is 0.8 μm to 2.0 μm and the acrylate rubber volume average particle size is 0.07 μm to 0.4 μm.

12. A polyblend as claimed in any one of the preceding claims, wherein the acrylate rubber is a crosslinked homopolymer of butyl acrylate or 2-ethylhexyl acrylate or a crosslinked copolymer thereof with up to 10 weight percent of a copolymerizable comonomer.